# DEMANDE DE BREVET EUROPEEN

(11) **EP 2 815 935 A2**
(43) Date de publication de la demande: **24.12.2014**
(21) Numéro de dépôt: 14172477.3
(22) Date de dépôt: 16.06.2014
(51) Int. Cl.: B60S 1/38

(54) **Balai d'essuie-glace**

(30) Priorité: 19.06.2013 FR 1355806
(71) Demandeur: Valeo Systèmes d'Essuyage, 78321 Le Mesnil Saint Denis (FR)
(72) Inventeur: Bousset, Xavier, 63115 MEZEL (FR); Grasso, Giuseppe, 63340 Le Breuil sur Couze (FR); Thebault, Denis, 63000 Clermont Ferrand (FR); Caillot, Gérald, 78720 CERNAY LA VILLE (FR)
(74) Mandataire: Callu Danseux, Violaine

(57) **Abrégé**

L'invention concerne une monture de support (10) pour balai d'essuie-glace, ladite monture (10) comprenant un corps présentant une direction d'extension longitudinale (X), ledit corps comprenant des premiers moyens destinés à recevoir une vertèbre de cintrage (20) et des seconds moyens définissant un logement inférieur ouvert (13) pour accueillir un talon supérieur de montage d'une lame d'essuyage du balai, caractérisé par le fait que lesdits seconds moyens comportent des évidements (52) facilitant le cintrage de ladite vertèbre (20).

L'invention concerne aussi un balai d'essuie-glace comprenant une telle monture (10). L'invention concerne encore un système d'essuyage comprenant un tel balai.

## Description

Le domaine de la présente invention est celui des équipements pour les véhicules, et plus particulièrement celui des équipements pour l'essuyage des vitres des automobiles.

Les automobiles sont couramment équipées de systèmes d'essuie-glace pour assurer un lavage du pare-brise et éviter que la vision qu'a le conducteur de son environnement ne soit perturbée. Ces essuie-glaces sont classiquement entraînés par des bras ou porte-balai effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "balai plat"), d'un ensemble semi-rigide qui maintient la lame racleuse sur toute sa longueur.

La demande de brevet FR2963595A1 divulgue un balai d'essuie-glace comportant une monture de support d'orientation principale longitudinale et une lame d'essuyage qui est portée par ladite monture. La monture comporte un corps tubulaire supérieur contenant une vertèbre de cintrage et un logement inférieur, ouvert, contenant un talon supérieur de montage de la lame d'essuyage. La fixation d'un déflecteur aérodynamique sur ladite monture de support est réalisée par clippage dans des rainures prévues latéralement sur la monture de support.

Le corps tubulaire supérieur, ou logement supérieur, peut se présenter fermé, comme dans la demande de brevet FR2963595A1. Il est aussi connu de le prévoir sensiblement ouvert selon ladite direction longitudinale. Cela permet d'accroitre la flexibilité de la monture de support. Cependant, en cas de conditions climatiques extrêmes, par exemple par grands froids, l'ouverture pratiquée sur le logement supérieur de la monture de support ne suffit pas à donner la flexibilité requise à ladite monture de support.

L'invention a pour but de proposer une monture de support pour balai d'essuie-glace dont la flexibilité est renforcée, quel que soit l'environnement climatique du balai d'essuie-glace.

A cet effet, l'invention a pour objet une monture de support pour balai d'essuie-glace, ladite monture comprenant un corps présentant une direction d'extension longitudinale, dite orientation principale longitudinale, ledit corps comprenant des premiers moyens destinés à recevoir une vertèbre de cintrage et des seconds moyens définissant un logement inférieur ouvert pour accueillir un talon supérieur de montage d'une lame d'essuyage du balai.

Selon l'invention, lesdits seconds moyens comportent des évidements facilitant le cintrage de ladite vertèbre.

Ainsi, la monture de support présente une flexibilité renforcée dans le sens longitudinal et en torsion par rapport à des montures sans évidements au niveau desdits seconds moyens, que le logement supérieur de ladite monture soit fermé ou ouvert.

Selon différents modes de réalisation de l'invention, qui pourront être pris ensemble ou séparément :
- chacun desdits évidements traverse lesdits seconds moyens dans leur épaisseur,
- lesdits seconds moyens sont des crochets longitudinaux et lesdits évidements traversent lesdits crochets,
- lesdits crochets s'étendent depuis une base dudit logement,
- lesdits premiers moyens définissent un logement, dit logement supérieur, qui est ouvert, au moins en partie, en son milieu, selon ladite direction d'extension longitudinale,
- ledit logement supérieur présente une partie supérieure ouverte sans interruption sur toute la longueur de ladite monture, de préférence en son milieu,
- lesdits premiers moyens sont des crochets, dits crochets longitudinaux, qui présentent une direction d'extension sensiblement parallèle, de préférence parallèle, à ladite direction d'extension longitudinale,
- ledit logement supérieur et ledit logement inférieur sont séparés par une paroi commune,
- ladite monture comprend en outre des ailettes latérales destinés à retenir un déflecteur dudit balai, chacune desdites ailettes comportant un harpon de fixation destiné à coopérer avec un harpon complémentaire agencé sur une branche dudit déflecteur,
- lesdites ailettes comportent elles aussi des évidements facilitant le cintrage de ladite vertèbre,
- chacun desdits évidements traverse lesdites ailettes dans leur épaisseur,
- chacun desdits évidements est réalisé selon une direction sensiblement transversale, notamment orthogonale à ladite direction d'extension longitudinale,
- ladite monture est en matériau plastique,
- ladite monture est en Polypropylène (PP),
- ledit deuxième logement supérieur, en particulier ladite vertèbre, est apte à recevoir un élément de chauffage,
- ledit élément de chauffage s'étend dans ladite direction d'extension longitudinale, le long de la monture de support.

Le montage du talon supérieur de la lame d'essuyage dans la monture est aisé et intuitif.

Selon un aspect de l'invention qui pourra être utilisé avec tout ou partie des caractéristiques précédentes, ledit logement supérieur comporte lui aussi des évidements.

Selon différents modes de réalisation de cet aspect de l'invention, qui pourront être pris ensemble ou séparément :
- chacun desdits évidements est réalisé selon une direction sensiblement transversale, notamment orthogonale, à ladite direction d'extension longitudinale,
- chacun desdits évidements traverse ledit logement supérieur dans son épaisseur,
- lesdits évidements forment des découpes incomplètes sur des parois latérales dudit logement supérieur.

Ledit corps est avantageusement symétrique par rapport à un plan de symétrie appartenant audit corps, ledit plan de symétrie étant orienté selon ladite direction d'extension longitudinale, de sorte que les évidements des seconds moyens, des ailettes et/ou dudit logement sont présents de part et d'autre de ladite monture.

L'invention concerne aussi un balai d'essuie-glace comprenant une monture telle que décrite ci-dessus, une vertèbre de cintrage et une lame d'essuyage, et de préférence aussi un déflecteur. Il s'agit ici préférablement d'un balai de type plat (aussi appelé « flat blade »), c'est-à-dire dépourvu de palonnier.

L'invention concerne aussi un système d'essuyage comprenant un tel balai.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés.

Sur ces dessins :
- la figure 1 est une vue en perspective d'un premier exemple de réalisation d'une monture selon l'invention,
- la figure 2 reprend la figure 1 et permet de visualiser, en outre, un déflecteur et une vertèbre d'un balai d'essuie-glace selon l'invention,
- la figure 3 est une vue en perspective d'un second exemple de réalisation de monture selon l'invention.

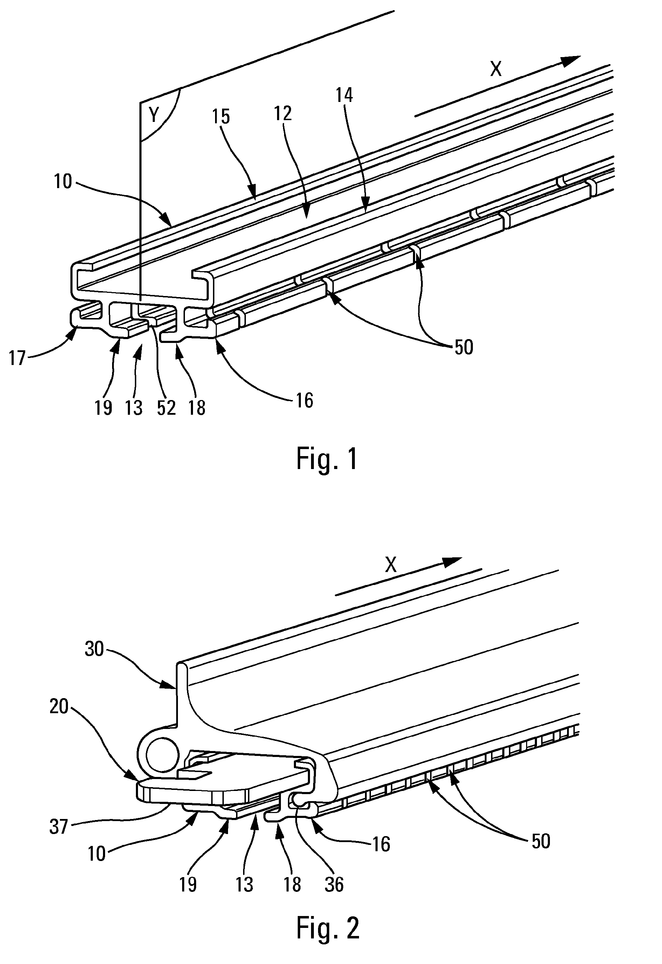

Comme illustrée aux différentes figures, l'invention concerne une monture de support 10 pour balai d'essuie-glace. La monture 10 de l'invention comprend un corps d'orientation principale longitudinale. Ladite orientation longitudinale est aussi celle du balai d'essuie-glace ; elle est repérée par la direction X sur les figures 1 à 3. Le corps de la monture 10 comprend des premiers moyens destinés à recevoir une vertèbre de cintrage 20. La vertèbre de cintrage 20 donne la rigidité nécessaire au plaquage du balai d'essuie-glace sur un pare-brise de véhicule et assure le maintien de la lame d'essuyage sur toute sa longueur. Le corps de la monture 10 comprend aussi des seconds moyens définissant un logement inférieur ouvert 13 pour accueillir un talon supérieur de montage d'une lame d'essuyage du balai.

Les premiers moyens destinés à recevoir la vertèbre de cintrage 20 peuvent être réalisés de différentes manières. Il pourra s'agir d'un logement supérieur fermé, destiné à contenir la vertèbre de cintrage 20. Comme illustré, le logement supérieur 12 pourra aussi être ouvert, en son milieu, selon la direction d'extension longitudinale X. De préférence, ledit logement supérieur 12 présente une partie supérieure ouverte sans interruption sur toute la longueur de ladite monture 10. Ledit logement supérieur 12 présente alors des parois latérales 14, 15 sous forme de crochets de retenue pour la vertèbre 20. Avantageusement, ces crochets présentent une section transversale sensiblement en forme de «L» tourné à 180° respectivement en sens horaire et antihoraire, et sont opposés symétriquement par rapport à un plan de symétrique Y de ladite monture 10. Ladite partie supérieure ouverte présente ainsi une largeur inférieure à la largeur du logement supérieur 12, lorsque ces largeurs sont mesurées dans des plans parallèles.

Les seconds moyens, quant à eux, définissent le logement inférieur ouvert 13 pour accueillir le talon supérieur de montage d'une lame d'essuyage du balai. Ladite lame d'essuyage n'est pas représentée ici mais elle est bien connue de l'homme du métier.

Lesdits seconds moyens sont des crochets 18, 19, dits crochets longitudinaux, qui présentent une direction d'extension sensiblement parallèle à ladite direction d'extension longitudinale. Ils s'étendent ici depuis une paroi commune aux logements supérieur 12 et inférieur 13, de laquelle sont également issus lesdits crochets de maintien de la vertèbre 20. Avantageusement, ces crochets longitudinaux 18, 19 présentent une section transversale sensiblement en forme de « L », et sont opposés symétriquement par rapport à un plan de symétrique Y de ladite monture 10. Ledit logement inférieur 13 présente alors une partie inférieure ouverte sans interruption sur toute la longueur de ladite monture 10. Cette partie inférieure ouverte présente une largeur inférieure à la largeur du logement inférieur 13, lorsque ces largeurs sont mesurées dans des plans parallèles.

Bien que la monture de support 10 soit prévue afin de donner la rigidité au balai d'essuyage, ladite monture 10 est en outre avantageusement flexible. En effet, celle-ci est aussi prévue pour adapter le plaquage du balai en fonction du pare-brise à essuyer.

Les montures de support 10 de l'art antérieur ne présentent pas une flexibilité satisfaisante selon toutes les circonstances. C'est pourquoi, selon l'invention, lesdits seconds moyens comportent, en outre, des évidements facilitant le cintrage de ladite monture 10.

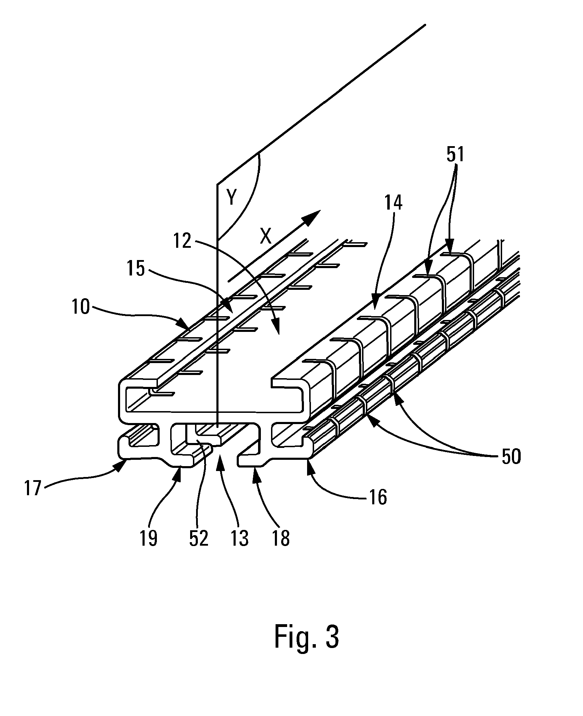

Lesdits évidements 52 sont visibles notamment sur les figures 1 et 3 ; ils sont réalisés selon une direction sensiblement transversale à ladite direction d'extension longitudinale X. Ils sont de préférence régulièrement espacés les uns des autres et traversent lesdits crochets longitudinaux 18, 19 dans leur épaisseur. Ils seront appelés premiers évidements 52 par la suite.

Ladite monture pourra aussi comprendre des ailettes latérales 16, 17 destinés à retenir le déflecteur aérodynamique 30 dudit balai. Ces ailettes latérales 16, 17 comprennent chacune un harpon de fixation destiné à coopérer avec un harpon complémentaire agencé sur une branche 36, 37 dudit déflecteur 30. Lesdites ailettes latérales 16, 17 s'étendent ici parallèlement à un bord inférieur des crochets de retenue 14, 15 de la vertèbre 20.

On peut aussi constater, sur l'ensemble des figures, que ledit logement inférieur 13 est situé de manière opposée au logement supérieur 12, et ce par rapport auxdites ailettes latérales 16, 17. En d'autres termes, le logement supérieur 12 et le logement inférieur 13 sont séparés par une paroi commune. Les ailettes latérales 16, 17 s'étendent ici depuis un bord latéral desdits crochets longitudinaux 18, 19 qui définissent le second inférieur 13.

D'autre part, des évidements 50 pourront être prévus sur les ailettes 16, 17. Ces évidements 50, visibles sur l'ensemble des figures, seront réalisés en complément des premiers évidements 52 pratiqués sur les crochets longitudinaux 18, 19. Ils seront appelés seconds évidements 50 par la suite.

Lesdits seconds évidements 50 traversent lesdites ailettes 16, 17 dans leur épaisseur et pourront être situés dans un même plan que les premiers évidements 52, au moins pour certains d'entre eux.

Ainsi, la monture selon l'invention présente une flexibilité renforcée, d'une part grâce à l'ouverture du premier logement dit logement supérieur 12 et, d'autre part, grâce aux premiers évidements 52 pratiqués régulièrement le long des crochets longitudinaux 18, 19 et aux seconds évidements 50 réalisés le long des ailettes latérales 16, 17. Il en résulte une monture 10 présentant une plus grande flexibilité.

D'autre part, l'assemblage entre la monture de support 10 et le déflecteur 30 est facilité. En effet, cet assemblage est d'abord réalisé par clippage des branches 36, 37 du déflecteur 30 à l'intérieur des ailettes 16, 17, puis par coulissement mutuel.

Les seconds évidements 50 réalisés sur les ailettes 16, 17 destinées à retenir le déflecteur 30 permettent de réduire la friction entre ces deux éléments, en particulier lors de leur assemblage.

Comme cela est visible sur la figure 3, dans un second exemple de réalisation de l'invention, les premiers et seconds évidements 50, 52 pourront être complétés par des évidements 51 réalisés sur les parois latérales 14, 15 du logement supérieur 12, en particulier lorsque celui-ci est ouvert. Ces évidements 51 seront appelés évidements complémentaires 51 par la suite.

Tout comme les évidements 50, 52 prévus sur les crochets longitudinaux 14, 15 et sur les ailettes latérales 16, 17, lesdits évidements complémentaires 51 seront réalisés selon une direction sensiblement transversale à ladite orientation longitudinale X. Ils traverseront, de plus, ledit logement supérieur 12 dans son épaisseur.

Lesdits évidements complémentaires 51 pourront, en particulier, former des découpes incomplètes sur les parois latérales 14, 15 du logement supérieur 12. Autrement dit, les découpes 51 laissent de la matière à leurs extrémités, le long de bords libres desdits crochets de retenue 14, 15 de la vertèbre.

Il est à noter que les évidements complémentaires 51 pourront aussi être réalisés sur les parois latérales du logement supérieur 12, même si celui-ci est fermé (exemple de réalisation non représenté).

Lesdits évidements complémentaires 51 sont de préférence régulièrement espacés les uns des autres, par exemple suivant le même pas que les premiers et/ou seconds évidements 50, 52 prévus sur les crochets longitudinaux 14, 15 et/ou sur les ailettes latérales 16, 17.

Les évidements complémentaires 51 pourront être situés dans un même plan que lesdits premiers et/ou seconds évidements 50, 52, au moins pour certains d'entre eux.

Ainsi, la monture selon l'invention présentera une flexibilité encore renforcée, d'une part grâce à l'ouverture du premier logement dit logement supérieur 12 et, d'autre part, grâce aux évidements 50, 51, 52 pratiqués régulièrement le long des crochets longitudinaux 18, 19 et/ou le long des ailettes latérales 16, 17 et le long des parois latérales du logement supérieur 12. Il en résultera une monture 10 flexible dans le sens longitudinal X mais aussi, flexible en torsion.

Un plan de symétrie Y est représenté sur les figures. Virtuellement, ce plan de symétrie Y est celui par rapport auquel le corps de ladite monture 10 est obtenu. On comprend ainsi que lesdits premiers et seconds évidements 50, 52 ainsi que les éventuels évidements complémentaires 51 sont situés les uns en face des autres de part et d'autre dudit plan de symétrie Y.

Il sera préférable de fabriquer la monture de support 10 en matériau plastique ; bien que tout autre matériau soit possible, par exemple un matériau métallique. Dans le cas présent, les évidements 50, 51, 52 pourront être aisément prévus lors de la fabrication de ladite monture 10 en un matériau plastique de type Polypropylène (PP).

Il est à noter que des variantes de réalisation sont bien sûr possibles. Notamment il est aussi possible, dans un mode de réalisation supplémentaire, que le logement supérieur 12, ou ladite vertèbre 20, soit apte à recevoir un élément de chauffage (mode de réalisation non représenté). Dans ce mode de réalisation, ledit élément de chauffage serait tel qu'il s'étendrait dans la direction d'extension longitudinale X, le long de la monture de support 10.

Quelque soit le mode de réalisation, l'invention qui vient d'être décrite trouvera une application préférée pour les balais d'essuie-glace des systèmes d'essuyage pour véhicule à moteur.

## Revendications

1. Monture de support (10) pour balai d'essuie-glace, ladite monture (10) comprenant un corps présentant une direction d'extension longitudinale (X), ledit corps comprenant des premiers moyens destinés à recevoir une vertèbre de cintrage (20) et des seconds moyens définissant un logement inférieur ouvert (13) pour accueillir un talon supérieur de montage d'une lame d'essuyage du balai, **caractérisé par le fait que** lesdits seconds moyens comportent des évidements (52) facilitant le cintrage de ladite vertèbre (20).

2. Monture (10) selon la revendication précédente, dans laquelle chacun desdits évidements (52) traverse lesdits seconds moyens dans leur épaisseur.

3. Monture (10) selon l'une quelconque des revendications 1 ou 2, dans laquelle lesdits premiers moyens définissent un logement (12), dit logement supérieur, qui est ouvert, au moins en partie, en son milieu, selon ladite direction d'extension longitudinale (X).

4. Monture (10) selon l'une quelconque des revendications 1 à 3, dans laquelle ledit logement supérieur (12) présente une partie supérieure ouverte sans interruption sur toute la longueur de ladite monture (10).

5. Monture (10) selon l'une quelconque des revendications 1 à 4, dans laquelle lesdits premiers moyens sont des crochets (18, 19), dits crochets longitudinaux, qui présentent une direction d'extension sensiblement parallèle à ladite direction d'extension longitudinale (X).

6. Monture (10) selon l'une quelconque des revendications 3 à 5, dans laquelle ledit logement supérieur (12) et ledit logement inférieur (13) sont séparés par une paroi commune.

7. Monture (10) selon l'une quelconque des revendications précédentes, comprenant en outre des ailettes latérales (16, 17) destinés à retenir un déflecteur (30) dudit balai, chacune desdites ailettes (16, 17) comportant un harpon de fixation destiné à coopérer avec un harpon complémentaire agencé sur une branche (36, 37) dudit déflecteur (30).

8. Monture (10) selon la revendication précédente, dans laquelle lesdites ailettes (16, 17) comportent des évidements (50) facilitant le cintrage de ladite vertèbre (20).

9. Monture (10) selon la revendication précédente, dans laquelle chacun desdits évidements (50) traverse lesdites ailettes (16, 17) dans leur épaisseur.

10. Monture (10) selon l'une quelconque des revendications précédentes, dans laquelle chacun desdits évidements (50, 52) est réalisé selon une direction sensiblement transversale à ladite direction d'extension longitudinale (X).

11. Monture (10) selon l'une quelconque des revendications 3 à 10, dans laquelle ledit logement supérieur (12) comporte des évidements (51), chacun desdits évidements (51) étant réalisés selon une direction sensiblement transversale à ladite direction d'extension longitudinale (X), lesdits évidements (51) traversant ledit logement supérieur (12) dans son épaisseur en formant des découpes incomplètes sur des parois latérales (14, 15) dudit logement supérieur (12).

12. Monture (10) selon l'une quelconque des revendications précédentes, dans laquelle ledit corps est symétrique par rapport à un plan de symétrie (Y) appartenant audit corps, ledit plan de symétrie (Y) étant orienté selon ladite direction d'extension longitudinale (X).

13. Balai d'essuie-glace comprenant une monture (10) telle que définie dans l'une quelconque des revendications précédentes, une vertèbre de cintrage (20) et une lame d'essuyage, et de préférence un déflecteur (30).

14. Système d'essuyage comprenant un balai tel que défini dans la revendication précédente.
